Europäisches Patentamt

European Patent Office

Office européen des brevets

(11) Veröffentlichungsnummer: **0 368 350**
**A2**

(12) **EUROPÄISCHE PATENTANMELDUNG**

(21) Anmeldenummer: **89120905.8**

(22) Anmeldetag: **10.11.89**

(51) Int. Cl.⁵: **B60R 15/04**

(30) Priorität: **11.11.88 AT 2775/88**

(43) Veröffentlichungstag der Anmeldung:
**16.05.90 Patentblatt 90/20**

(84) Benannte Vertragsstaaten:
**ES GR**

(71) Anmelder: **ALEX. FRIEDMANN
KOMMANDITGESELLSCHAFT
Handelskai 134
A-1020 Wien(AT)**

(72) Erfinder: **Denk, Wolfgang
Varnhageng. 17/6/5
A-1220 Wien(AT)**
Erfinder: **Kubala, Christian
Kirchengasse 3
A-7083 Purbach(AT)**

(74) Vertreter: **Fuchs, Franz-Josef, Dr.-Ing.
Postfach 22 13 17
D-8000 München 22(DE)**

(54) **Entsorgungseinrichtung für Toiletteanlagen für Fahrzeuge mit Verbrennungskraftmaschinen.**

(57) Entsorgungseinrichtung für Toiletteanlagen in von Verbrennungskraftmaschinen angetriebenen Fahrzeugen. Die Abfallprodukte der Toilette durchströmen eine von den Abgasen der Verbrennungskraftmaschine beheizte Transport- und Trockeneinrichtung, in der sie zu Trockensubstanz verarbeitet werden, die leicht entnehmbar ist.

EP 0 368 350 A2

## Entsorgungseinrichtung für Toiletteanlagen für Fahrzeuge mit Verbrennungskraftmaschinen

Die Erfindung betrifft eine Entsorgungseinrichtung für Toiletteanlagen in von Verbrennungskraftmaschinen angetriebenen Fahrzeugen, insbesondere Reiseautobussen, Dieseltriebwagen, Schiffe od. dgl., mit einer von den Abfallprodukten der Toiletteanlage durchströmten und von den Abgasen der Verbrennungskraftmaschine beheizten Transport- und Trockeneinrichtung.

Für die Entsorgung der Toiletten in Fahrzeugen der oben angegebenen Art wurde bisher zumeist eine chemische Neutralisierung vorgesehen, die jedoch eine Umweltbelastung darstellt und oft auch den hygienischen Anforderungen nicht genügt.

Eine Reihe von bekannt gewordenen Ausführungen von Toiletteanlagen entsorgen die Abfallprodukte auf dem Wege der Verbrennung. Hierbei tritt eine Reihe von Problemen auf, vor allem in Bezug auf die Wärmeisolation. Solche Anlagen sind vor allem für Eisenbahnfahrzeuge vorgeschlagen worden, jedoch wegen der hohen Feuergefahr für Kraftfahrzeuge ungeeignet. Außerdem ist diese Variante sehr energieaufwendig.

Durch die DE-OS 33 33 481, DE-OS 2 300 939, DE-OS 2 254 004 und DE-OS 2 214 493 ist es bekannt geworden, Entsorgungseinrichtungen für Toiletteanlagen von in Verbrennungskraftmaschinen angetriebenen Fahrzeugen mit einer von den Abfallprodukten durchströmten und von den Abgasen der Verbrennungskraftmaschine beheizten Transport- und Trockeneinrichtung zu versehen.

Gegenüber diesen bekannten Einrichtungen zeichnet sich die Erfindung durch einfachen und robust ausführbaren Aufbau aus. Erfindungsgemäß wird dies dadurch erzielt, daß die Transport-und Trockeneinrichtung aus einem eine mit einem Motorantrieb versehene Förderschnecke enthaltenden Rohr besteht, das mit einem von den Abgasen durchströmten, rohrförmigen Mantel umgeben ist. Dadurch, daß die Abgase das Förderrohr unmittelbar umspülen, ist ein optimaler Wärmeaustausch und damit eine maximale Energienutzung gewährleistet. Damit erübrigt sich eine umständliche Beförderung des Abfalls zu solchen Stellen, an denen die erforderliche Hitze auftritt. Selbstverständlich muß auch bei der Erfindung die erzeugte Abwärme an sich zur Verarbeitung des maximal zu erwartenden Abfalles ausreichen und die Fördereinrichtung und Förderleistung entsprechend dimensioniert sein.

Die erfindungsgemäße Entsorgungseinrichtung verarbeitet die Abfallprodukte zu einer auf minimales Volumen reduzierten Trockensubstanz, die zufolge der hohen Temperatur in der Transport- und Trockeneinrichtung von allen übelriechenden Stoffen befreit ist und daher ohne Geruchsbelästigung, beispielsweise in Form von Pulver oder Briketts entfernt werden kann.

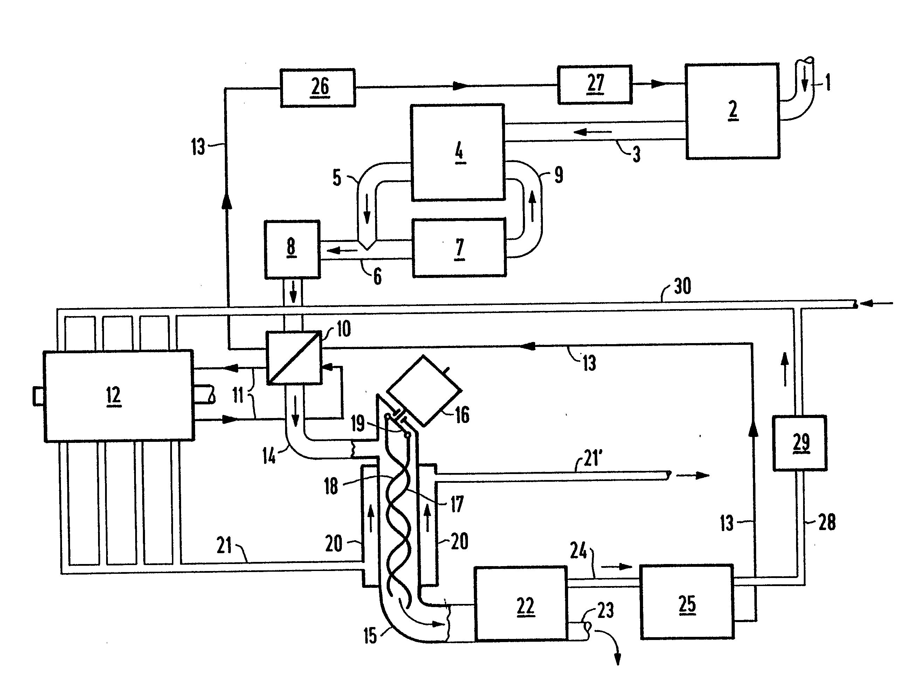

Ein Ausführungsbeispiel der Erfindung ist in der Zeichnung dargestellt.

Die Abfallsprodukte der Toiletteanlage werden über ein Fallrohr 1 einem Sammelbehälter 2 zugeführt. Aus diesem fließen die Abfallprodukte in dem Ausmaß, das die Verarbeitungsgeschwindigkeit der Anlage zuläßt, durch ein Rohr 3 in einen Zwischenbehälter 4 und aus diesem über weitere Rohre 5 und 6 zum Teil in eine Umwälzpumpe 7, die auch mit einer Zerkleinerungsvorrichtung für brockige Bestandteile versehen ist und zum anderen Teil in homogenisierter Form in eine Dosierpumpe 8. Durch eine nicht näher dargestellte Ausgestaltung der Rohre 5,6 sowie durch entsprechende Filter ist dafür gesorgt, daß die brockigen Bestandteile zuerst in die Umwälzpumpe 7 gelangen, aus der danach die homogenisierte Substanz über ein Rückführrohr 9 nochmals in den Zwischenbehälter 4 und dann schließlich in die Dosierpumpe 8 gelangt. Aus der letzteren fließt die Substanz in einen Wärmetauscher 10, der einerseits in den Kühlmittelkreislauf 11 der mit 12 bezeichneten Verbrennungskraftmaschine und anderseits in eine Kondenswasser-Rückführleitung 13 eingeschaltet ist und dabei dem Kühlmittelkreis 11 und der Rückführleitung 13 die Wärme entzieht.

Die solcherart im Wärmetauscher 10 erhitzte Substanz wird über ein weiteres Rohr 14 der Transport- und Trockeneinrichtung zugeführt, die im wesentlichen aus einem stärkeren Rohr 15 besteht, das eine mit einem Motorantrieb 16 versehene Fördrschnecke enthält. Die Förderschnecke selbst besteht aus zwei ineinander verschraubten Wendeln 17 und 18, die vom Antriebsmotor 16 in ständiger Rotation gehalten werden und zwar in dem Sinn, daß der Schraubensinn der Wendeln 17, 18 eine Schubbewegung auf die im Rohr 15 befindliche Substanz in Richtung auf das untere Ende des Rohres 15 ergibt. Die Achse des Antriebsmotors 16 ist an ihrem freien Ende mit einem senkrecht zu ihr stehenden Doppelhebel 19 versehen. An jedem der beiden Enden des Doppelhebels 19 ist je eine der Wendeln 17 bzw. 18 angelenkt und erfährt über den zugehörigen Teil des Doppelhebels 19 das für die Ausführung der Rotationsbewegung erforderliche Drehmoment. Die Achse des Antriebsmotors 16 ist jedoch etwas schräg gegenüber der Achse des Rohres 15 angeordnet. Hierdurch erfahren die Wendeln 17 und 18 nicht nur die Rotationsbewegung, sondern auch eine periodische axiale Relativbewegung gegeneinander, die einen ständigen Reinigungsprozeß bewirkt, derart, daß sich keine getrocknete Substanz an den Wendeln 17, 18 anlagern kann, die den Bewegungsvorgang behindern könnte.

Die Trocken- und Transporteinrichtung besteht weiters aus einem das Rohr 15 umgebenden rohrförmigen Mantel 20, der von den heißen Abgasen der Verbrennungskraftmaschine 12 durchströmt wird, die mittels eines Abgasrohres 21 zugeführt werden. Die Abgase umspülen das Rohr 15 im Gegenstrom zu der durch das Rohr 15 hindurchtransportierten Substanz und erhitzen diese dabei soweit, daß sie völlig austrocknet, wobei sich die gasförmigen und dampfförmigen Bestandteile von der Trockensubstanz trennen. Die Abgase entweichen über ein Auspuffrohr 21'.

Die am Ende des Rohres 15 austretende Trockensubstanz wird einem Feststoffabscheider 22 zugeführt und von diesem über einen Ausgang 23 entweder laufend oder fallweise bei einem eigenen Entleerungsvorgang ausgeschieden.

Die gas- und dampfförmigen Bestandteile werden über ein Rohr 24 einem Flüssigkeitsabscheiders 25 zugeführt. Die dort kondensierte Flüssigkeit, im wesentlichen Wasser, wird über die Rückführleitung 13 zunächst dem Wärmetauscher 10 und danach einem Filter 26 zugeführt. Das dort gereinigte Wasser wird einem Spülwasserbehälter 27 zugeführt, aus dem es bei Bedarf in den Sammelbehälter 2 gelangt.

Die dem Flüssigkeitsabscheider 25 entweichenden Gase werden über eine Leitung 28 nach Durchlaufen eines Rauchgasfilters 29 der Ansaugleitung 30 der Verbrennungskraftmaschine 12 zugeführt.

## Ansprüche

Entsorgungseinrichtung für Toiletteanlagen in von Verbrennungskraftmaschinen angetriebenen Fahrzeugen, insbesondere Reiseautobussen, Dieseltriebwagen, Schiffe od. dgl., mit einer von den Abfallprodukten des Toiletteanlage durchströmten und von den Abgasen der Verbrennungskraftmaschine beheizten Transport- und Trockeneinrichtung, **dadurch gekennzeichnet,** daß die Transport- und Trockeneinrichtung aus einem eine mit einem Motorantrieb (16) versehene Förderschnecke (17,18) enthaltenden Rohr (15) besteht, das mit einem von den Abgasen durchströmten, rohrförmigen Mantel (20) umgeben ist.

EP 0 368 350 A2